# EUROPÄISCHE PATENTSCHRIFT

(11) **EP 0 447 918 B1**
(45) Veröffentlichungstag und Bekanntmachung des Hinweises auf die Patenterteilung: **28.07.1993**
(21) Anmeldenummer: 91103718.2
(22) Anmeldetag: 11.03.1991
(51) Int. Cl.: B25J 17/02, B23P 19/00

(54) **Toleranzausgleichsvorrichtung**
Tolerance deviation compensation device
Dispositif de compensation de déviations de tolérance

(30) Priorität: 19.03.1990 DE 4008788
(43) Veröffentlichungstag der Anmeldung: 25.09.1991
(73) Patentinhaber: Weisz, Harald, D-80638 München (DE)
(72) Erfinder: Weisz, Harald, D-80638 München (DE)
(74) Vertreter: Heim, Hans-Karl, Dipl.-Ing.

(56) Entgegenhaltungen:
- EP-A- 0 036 912
- DE-A- 2 556 595
- DE-A- 3 346 160
- DE-A- 3 410 587

## Beschreibung

Die Erfindung betrifft eine Toleranzausgleichsvorrichtung gemäß dem Oberbegriff des Anspruchs 1.

Aus der EP 036 912 A1 ist eine gattungsgemäße Toleranzausgleichsvorrichtung bekannt. Diese Toleranzausgleichsvorrichtung besitzt eine Vorspanneinrichtung aus zwei Federn, die einerseits direkt an einem Eingriffselement angreifen und andererseits an den Wänden eines zweiten Kupplungsteiles befestigt sind. Die Null-Lage wird daher bei dieser Vorrichtung allein durch die Auslegung der mechanischen Federn bestimmt. Sofern eine bevorzugte Auslenkungsrichtung auftritt, was zu Ermüdungserscheinungen der Federn führt, bedeutet dies, daß das entsprechende Eingriffselement nicht mehr in die ursprünglich definierte Null-Lage zurückgeführt werden kann.

Eine weitere, vergleichbare Toleranzausgleichsvorrichtung ist aus der DE-OS 25 56 595 bekannt. Auch dort ist die Null-Lage durch die entsprechenden Federkräfte von Federn bestimmt, so daß auch hier ganz vergleichbare Nachteile, wie vorausgehend erwähnt, vorhanden sind.

In der industriellen Fertigung ist der Einsatz vor Robotern vor allem in automatisierter Montagestrecken weit verbreitet. Diese Roboter haben sich vor allem im Bereich der Endmontage und auch bei der Platinenbestückung bewährt. Hierbei ist es vor allem erforderlich, daß eine genaue Positionierung eines zu montierenden Elements an der Montagestelle erreicht wird.

Aufgrund von Fertigungstoleranzen ist es jedoch möglich, daß das zu montierende Teil nicht exakt über der Montagestelle positioniert wird. Insbesondere wenn bolzenähnliche Teile in Bohrungen eingefügt werden sollen, können sich die zu fügenden Teile verklemmen und beschädigt werden.

Um derartige Beschädigungen zu vermeiden, wird in den Arm des Roboters möglichst nahe am Bereich des Greifers eine Kupplung eingebaut, die zwei senkrecht zur Roboterfaustachse ausgerichtete Platten aufweist, die über Elastomere miteinander verbunden sind. Diese Kupplung ermöglicht ein geringes seitliches Ausweichen des Roboterarms in Bezug auf die Montagestelle, womit das zu montierende Teil ohne Beschädigung montiert werden kann. Derartige Elastomer-Kupplungen haben jedoch den Nachteil, daß sie im Verlauf ihrer Lebensdauer einer ständigen geringen Verformung unterworfen sind und daß sie nach einer stärkeren Auslenkung nicht wieder exakt in die Nullstellung, d.h. in die nicht ausgelenkte Lage zurückkehren.

Weiterhin läßt die bekannte Elastomer-Kupplung nur geringe Auslenkungen zu, so daß größere Fertigungstoleranzen wiederum zu einem Verklemmen von miteinander zu montierenden Teilen führen können.

Es ist Aufgabe der Erfindung, eine Toleranzausgleichsvorrichtung der gattungsgemäßen Art zu schaffen, die bei langer Lebensdauer, große Auslenkungen des Greifers unter Beibehaltung einer sehr hohen Rückstellgenauigkeit in die nicht ausgelenkte, präzise Null-Lage ermöglicht.

Die Aufgabe wird bei einer Toleranzausgleichsvorrichtung der gattungsgemäßen Art erfindungsgemäß durch die kennzeichnenden Merkmale des Anspruchs 1 gelöst. Vorteilhafte Weiterbildungen sind Gegenstand der Unteransprüche.

Das Eingriffselement des einen Kupplungsteils greift zwischen die Federelemente des anderen Kupplungsteils, wodurch das eine Kupplungsteil relativ zum anderen Kupplungsteil in eine nicht ausgelenkte Lage vorgespannt ist. Die maximale Auslenkung des einen Kupplungsteils relativ zum anderen Kupplungsteil ist durch den Federweg der Federelemente bestimmbar. Anstelle von mehreren Federelementen kann auch eine einzige Feder verwendet werden, wobei das Eingriffselement dann vorzugsweise in die Mitte der als Schraubenfeder ausgebildeten Feder eingreift. Die Abschnitte der Feder zu beiden Seiten des Eingriffselements stellen dann die Federelemente dar.

Damit eine exakte Positionierung der Kupplungsteile relativ zu einander in Nullstellung, d.h. in nicht ausgelenkter Lage realisierbar ist, ist zwischen den Federelementen ein fester Nullanschlag vorgesehen, auf den die Federelemente das Eingriffselement vorspannen. Diese genaue Einstellung der Null-Lage der beiden Kupplungsteile relativ zueinander ermöglicht die Verwendung der erfindungsgemäßen Toleranzausgleichsvorrichtung auch in solchen Fällen, in denen eine sehr präzise Positionierung des Greifers eines Roboters erforderlich ist (z.B. bei Fügevorgängen).

Die Federelemente sind vorzugsweise in der Führungseinrichtung angeordnet, wobei das Eingriffselement in der Führungseinrichtung geführt ist. Auf diese Weise übernehmen die Federelemente und das Eingriffselement nicht nur die Vorspannung der beiden Kupplungsteile relativ zu einander in eine bestimmte Lage, sondern haben auch gleichzeitig Führungsfunktion beim Auslenken der beiden Kupplungsteile relativ zu einander. Die Toleranzausgleichsvorrichtung ist hierdurch kompakt und kostengünstig herstellbar.

Eine vorteilhafte Weiterbildung der Erfindung ermöglicht eine äußerst präzise Positionierung der Kupplungsteile relativ zu einander in Null-Lage, wenn die einander zugewandten Enden der Federelemente von jeweils einer zylinder- bzw. topfförmigen Buchse umgeben sind. Der Boden des Zylinders bzw. des Topfes ist dann senkrecht zur Vorspannrichtung der Federelemente angeordnet, wodurch sich eine exakte Anlagefläche für das Eingriffselement an den Federelementen ergibt, die unabhängig von der rotativen Lage der Federalemente verläuft.

Vorzugsweise ist der Nullanschlag durch zwei mit der Längsführung verbundene und quer zur Längsführung nebeneinander angeordnete Anschlagstifte gebildet. Diese Anschlagstifte sind dabei in etwa gleich weit von der zentralen Achse der Längsführung entfernt. Dies ermöglicht eine einwandfreie Anlage der einander zugewandten Enden der Federelemente an dem Nullanschlag. Wenn das Eingriffselement als Eingriffsstift ausgebildet ist und die Anschlagstifte mindestens um den Durchmesser des Eingriffsstiftes von einander beabstandet sind, kann der Eingriffsstift in Nullstellung exakt zwischen den Anschlagstiften positioniert werden. Der Durchmesser des Eingriffsstiftes und der Anschlagstifte ist hierfür vorzugsweise gleich groß.

Die Toleranzausgleichsvorrichtung ermöglicht eine Auslenkung des Greifers in einer Ebene quer zum Roboterarm, wenn zwei quer, vorzugsweise rechtwinklig zueinander angeordnete Längsführungen vorgesehen sind. Die Kupplung besteht dann vorzugsweise aus drei Kupplungsteilen, wobei die äußeren beiden Kupplungsteile jeweils ein Eingriffselement und das mittlere Kupplungsteil die beiden Längsführungen mit den zugehörigen Federelementen aufweist. Dieses mittlere Kupplungsteil ist in etwa wie ein Kreuzschlitten aufgebaut und ist auch in seiner Funktionsweise damit vergleichbar. Hierdurch wird eine Auslenkung des greiferseitigen Kupplungsteils relativ zum antriebsseitigen Kupplungsteil in der gesamten Ebene quer zur Roboterarmachse ermöglicht. Dabei wird in allen Richtungen quer zur Roboterarmachse eine exakte Positionierung der Toleranzausgleichsvorrichtung in Null-Lage realisiert.

Die Rückstellkraft, die durch die Federelemente auf das Eingriffselement in Richtung auf den Nullanschlag wirkt, ist durch die Größe und Ausbildung der Federn definiert. In einer vorteilhaften Weiterbildung der Erfindung sind die Anschläge für die Anlage der voneinander wegweisenden Enden der Federelemente parallel zu deren Längsrichtung einstellbar. Hierdurch kann exakt die Rückstellkraft in einer bestimmten Richtung grösser eingestellt werden als in einer anderen Richtung. Die Federn können auch eine geknickte Federkennlinie aufweisen, so daß eine geringe Auslenkung der Kupplungsteile relativ zu einander ohne größere Kraft möglich ist, eine größere Auslenkung jedoch eine sehr viel höhere Auslenkkraft erfordert.

Um ein Schwingen der Toleranzausgleichsvorrichtung zu verhindern, ist parallel zu den Federelementen eine Dämpfungseinrichtung vorgesehen. In vorteilhafter Weise sind die Federelemente als Schraubenfedern ausgebildet und die Dämpfungseinrichtung ist koaxial in den beiden Federn angeordnet. Die Dämpfungskraft wirkt somit direkt auf das Eingriffselement und die Abmessungen der gesamten Toleranzausgleichsvorrichtung werden nicht vergrößert. Die Toleranzausgleichsvorrichtung mit der Dämpfungseinrichtung läßt sich daher kompakt herstellen.

Die Toleranzausgleichsvorrichtung ermöglicht weiterhin eine rotative Auslenkung der Kupplungsteile relativ zu einander, wenn eine Längsführung in Umfangsrichtung oder tangential zu einem Umfangskreis um die Roboterarmachse angeordnet ist. Das Zentrum der Rotationsbewegung kann dabei durch die oben beschriebene kreuzschlittenartige Toleranzausgleichsvorrichtung zusätzlich in der Ebene quer zur Roboterarmachse auslenkbar sein. In diesem Fall lassen sich lineare Bewegungen quer zur Roboterarmachse mit rotativen Bewegungen um die Roboterarmachse überlagern. Die Toleranzausgleichsvorrichtung ermöglicht damit Ausweichbewegungen eines Robotergreifers mit einer großen Anzahl von Freiheitsgraden.

Ein wesentlicher Vorteil des erfindungsgemäßen Prinzips kann darin gesehen werden, auch von den relativ teueren Ausführungsformen der Linearführungen, wie sie nach dem Kreuzschlittenprinzip vorhanden sind, abzugehen und statt dessen in relativ einfacher Form ein Polarkoordinatenprinzip vorzusehen. Bei diesem Polarkoordinatenprinzip, wie es auch nachfolgend in den Zeichnungen noch beschrieben wird, sind die zugeordneten beiden Anschlagstifte und der zwischen diesen bewegbare Eingriffsstift z.B. auf einer Kreisbogenbahn mit einem Winkel von ± 15° bewegbar. Bei der Annahme dieses letztgenannten Kreisbogensegmentes z.B. im wesentlichen in Richtung der X-Achse wird diesem eine weitere Kreisbogenauslenkung in ganz analoger Ausführung z.B. in der Y-Achse überlagert. Es können daher Toleranzausgleichsbewegungen bei der linearen Ausführungsform von beispielsweise 2 x 2 mm im kartesischen Koordinatensystem auch im Polarkoordinatensystem jedoch mit einfacherer konstruktiver Form bewältigt werden.

Die Wiederholgenauigkeit beim erfindungsgemäßen Prinzip liegt etwa bei ± 3 µm, wobei dies unabhängig von der Ausführungsform, linear oder polarkoordinatenmäßig ist. Auch können mittels der erfindungsgemäßen Toleranzausgleichsvorrichtung ergänzend zu den Auslenkwegen auch Drehmomentbewegungen übertragen werden, so daß beispielsweise die Toleranzausgleichsvorrichtung auch für sechs Freiheitsgrade ausgelegt werden kann.

Gerade im Vergleich mit der relativ geringen Wiederholgenauigkeit von z.B. ± 0,05 mm bei mit Elastomeren arbeitenden Toleranzausgleichsvorrichtungen kann mit dem erfindungsgemäßen Prinzip die hohe Wiederholgenauigkeit von etwa 3 µm in allen Achsen erreicht werden. Alterungserscheinungen wie sie bei Elastomeren vorhanden sind, die dann auch weitgehend nur eine Eigendämpfung aufweisen und keine Möglichkeit von Drehmomentübertragungen haben, sind beim erfindungsgemäßen Toleranzausgleicher nicht vorhanden. Die gewünschten Rückstellkräfte können für die jeweiligen Achsen sozusagen separat eingestellt werden. Es besteht bei der Erfindung auch die elegante Möglichkeit das konstruktive Prinzip an die gewünschten kleinen oder größeren Führungslängen anzupassen.
Auch im Hinblick auf Wartungsfreundlichkeit können bei der Erfindung die auszutauschenden Teile weitgehend einzeln ausgetauscht werden. Die Erfindung ermöglicht es auch, die Rückstellcharakteristik in den Ausgleichsrichtungen separat einzustellen, wobei durch Wahl der Federkonstanten oder der Federvorspannung auch von vorne herein Gewichtsausgleiche herbeigeführt werden können.

In einer vorteilhaften Weiterbildung der Erfindung ist ein Lagesensor zur Bestimmung der Lage der Kupplungsteile relativ zueinander vorgesehen. Auf diese Weise kann erfaßt werden, ob bei wiederholten Positionierungsvorgängen eine ständige Auslenkung in einer bestimmten Richtung erfolgt. Die Richtung und die Größe der Auslenkung kann dann über den Lagesensor erfaßt und einer Steuereinheit zugeführt werden, die eine Neupositionierung durchführt, die dazu führt, daß bei den nachfolgenden Positionierungsvorgängen von Montageteilen eine exakte Positionierung der zu montierenden Teile relativ zueinander erreicht wird. Die Erfindung wird nachfolgend beispielsweise in der schematischen Zeichnung beschrieben. In dieser zeigen:
- Fig. 1: eine Aufsicht auf eine Toleranzausgleichsvorrichtung mit einer X-Y-Koordinatenführung;
- Fig. 2: einen Schnitt II-II aus Fig. 1;
- Fig. 3: eine Aufsicht auf eine Toleranzausgleichsvorrichtung für rotative Bewegungen;
- Fig. 4: einen Schnitt IV-IV aus Fig. 3;
- Fig. 5: einen Schnitt V-V aus Fig. 3;
- Fig. 6: ein kinematisches Schema für die Toleranzausgleichsvorrichtung nach den Figuren 3 bis 5 und
- Fig. 7,8: einen Schnitt längs der Linie A-A nach Fig. 2 mit dargestellter präziser Null-Lage sowie einer Auslenkung nach links.

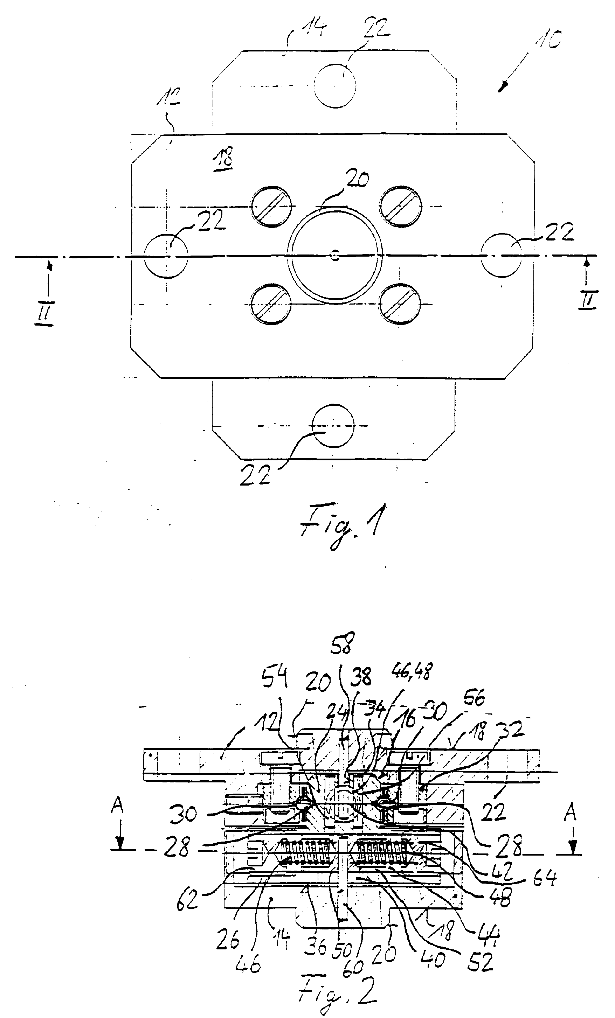

In Fig. 1 ist die Aufsicht auf eine Kupplung 10 dargestellt, die zum Einbau in einen Roboterarm vorgesehen ist. In Fig. 1 ist die Aufsicht in Richtung der Roboterarmachse dargestellt. Die Kupplung 10 hat ein oberes und ein unteres Kupplungsteil 12,14 die relativ zueinander in einer Ebene quer zur Roboterarmachse beweglich sind. Das obere und untere Kupplungsteil 12,14 sind identisch ausgebildet, wodurch die Herstellungskosten einer derartigen Toleranzausgleichsvorrichtung vermindert werden. Das obere und untere Kupplungsteil 12,14 sind über ein mittleres Kupplungsteil 16 miteinander verbunden. Ausgehend von einem kartesischen Koordinatensystem mit der Roboterarmachse als Z - Achse sind das obere und untere Kupplungsteil 12,14 an dem mittleren Kupplungsteil 16 in X - bzw. Y-Richtung längsverschiebbar geführt. Das obere und untere Kupplungsteil haben jeweils eine Anlagefläche 18, die zur Befestigung am Roboterarm bzw. am Greifer dient. Eine exakte Positionierung der Kupplung 10 im Roboterarm wird durch Zentriersegmente 20 und Bohrungen 22 realisiert.

Die Funktion der Toleranzausgleichsvorrichtung wird anhand von Fig. 2 näher erläutert.

Das mittlere Kupplungsteil 16 besteht aus zwei länglichen, kreuzförmig an einander angeordneten balkenförmigen Abschnitten 24,26, die einstückig miteinander verbunden sind. An den Außenwänden der balkenförmigen Abschnitte 24,26 ist jeweils eine in Längsrichtung des Abschnittes 24,26, also in X - oder in Y - Richtung verlaufende Rille 28 zur Aufnahme eines linearen Kugellagers angeordnet, wobei die komplementär dazu verlaufende Rille 30 an mit dem oberen und dem unteren Kupplungsteil verschraubbaren Führungselementen 32 angeordnet ist. Die Rillenkugellager zwischen den Rillen 28 und 30 dienen somit als Längsführung des oberen und unteren Kupplungsteils 12,14 an dem mittleren Kupplungsteil 16. Das mittlere Kupplungsteil 16 ist somit als Kreuzschlittenführung für das obere und untere Kupplungsteil 12,14 ausgebildet.

Die balkenförmigen Abschnitte 24,26 haben an ihren nach oben bzw. nach unten weisenden Seiten 34,36 jeweils eine in Längsrichtung verlaufende Aussparung 38,40, die in einem zentrisch in den Abschnitten 24,26 verlaufenden Hohlraum 42,44 mündet.

In Fig. 2 ist dieser Hohlraum 42 des Abschnitts 24 quergeschnitten und der Hohlraum 44 des Abschnitts 26 längsgeschnitten dargestellt. Die Ausbildung der Hohlräume und der Federelemente in den Abschnitten 24,26 ist identisch, weshalb bei der Erläuterung einzelner Details und Funktionen lediglich auf die Elemente des Abschnitts 24 oder des Abschnitts 26 Bezug genommen wird. Selbstverständlich sind alle Elemente, die in einem Abschnitt 24 oder 26 kein Bezugszeichen haben, auch bei diesem Abschnitt 24,26 in gleicher Weise wie bei dem jeweils anderen beschriebenen Abschnitt 26,24 vorgesehen und ausgebildet.

In dem Hohlraum 44 sind zwei Federelemente 46,48 geführt. Diese Federelemente 46,48 sind an ihren einander zugewandten Längsenden von topfförmigen Buchsen 50,52 umgeben, die durch die Federvorspannung an zwei in Längsrichtung mittig angeordneten Anschlagstiften 54,56 anliegen. Diese Anschlagstifte 54,56 sind voneinander mindestens um ihren eigenen Durchmesser beabstandet und in diesen Zwischenraum greift jeweils ein von dem oberen bzw. unteren Kupplungsteil 12,14 abstehender Eingriffsstift 58,60 ein. Die Federelemente 46,48 sind an ihren voneinander wegweisenden Längsenden durch in die Abschnitte 24,26 einschraubbare Anschlagbuchsen 62,64 widergelagert. Der Druck der Federelemente 46,48 gegen die Anschlagstifte 54,56 und den Eingriffsstift 58,60 läßt sich durch ein mehr oder weniger weites Einschrauben der Anschlagbuchsen 62,64 in die Abschnitte 24,26 des mittleren Kupplungsteils 16 beliebig einstellen.

Durch diese Vorrichtung werden das obere und das untere Kupplungsteil 12,14 an dem mittleren Kupplungsteil 16 sowohl geführt, als auch relativ zu diesem in eine nicht ausgelenkte Lage vorgespannt. Die Vorspannung in Null-Lage ist dadurch gekennzeichnet, daß der Eingriffsstift 58,60 zwischen den Anschlagstiften 54,56 zu liegen kommt. Um die Positionierung in dieser Null-Lage spielfrei zu machen, hat der Eingriffsstift 58, 60 vorzugsweise den gleichen Durchmesser wie die Anschlagstifte 54,56.

Durch diese Toleranzausgleichsvorrichtung wird eine definierte Auslenkung eines Greifers an dem Roboterarm in X - Y - Richtung (bei Z - Richtung gleich Roboterarmachse) ermöglicht, wobei nach der Auslenkung ein genaues Rückstellen der Kupplungsteile 12,14 in die Null-Lage erfolgt. Die Wiederholungsgenauigkeit der Positioniervorgänge wird also durch eine durch Fertigungstoleranzen verursachte Auslenkung des Greifers, z.B. bei Fügevorgängen nicht beeinträchtigt.

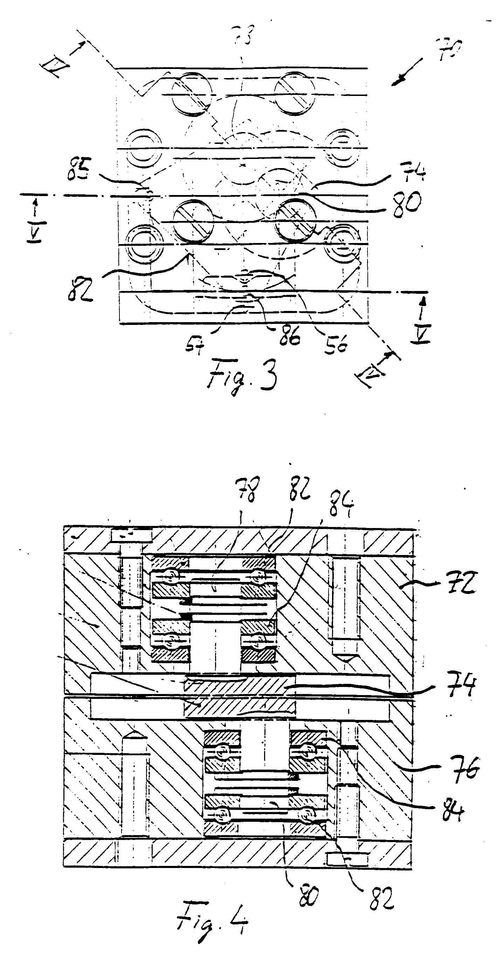

Eine andere Ausführungsform der Erfindung ist in den Figuren 3 bis 6 dargestellt. Auch diese Ausführungsform der Erfindung ermöglicht eine Auslenkung des Greifers eines Roboterarmes bzw. der Kupplungsteile relativ zueinander in X - Y - Richtung (im kartesischen Koordinatensystem mit Z gleich Roboterarmachse), wobei die Kupplungsteile relativ zueinander nicht durch Linearführungen, sondern an Drehachsen relativ zueinander beweglich sind.

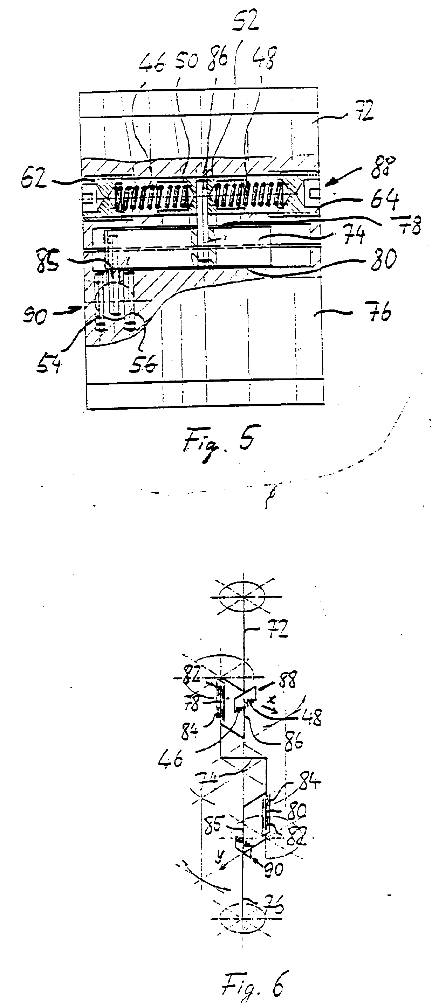

Fig. 3 zeigt die Aufsicht auf eine Kupplung 70. Das Ausführungsbeispiel wird in erster Linie anhand der Darstellungen in den Figuren 4 und 5 verdeutlicht.

Die Kupplung 70 besteht aus drei Kupplungsteilen 72,74,76. Als Richtungsbezeichnungen werden wieder die X - Y und Z - Achse des kartesischen Koordinatensystems verwendet, wobei die Roboterarmachse mit der Z - Achse des Koordinatensystems zusammenfällt. Das mittlere Kupplungsteil 74 ist als sich in XY - Richtung erstreckende trapezförmige Platte 74 ausgebildet, von der sich beidseitig parallel zur Z - Achse, jedoch von dieser beabstandet, jeweils ein Lagerzapfen 78,80 erstreckt. Der Lagerzapfen 78 ist in dem oberen Kupplungsteil 72 und der Lagerzapfen 80 in dem unteren Kupplungsteil 76 mittels Axialkugellager 82, 84 drehbar gelagert. Um eine große Stabilität und Genauigkeit der Lagerung zu gewährleisten, sind pro Lagerzapfen 78,80 jeweils zwei in Z - Richtung axial versetzte Axialkugellager 82, 84, vorgesehen. Diese rotative Lagerung ermöglicht ein Verdrehen aller drei Kupplungsteile 72,74,76 relativ zueinander. Diese rotative Beweglichkeit der Kupplungsteile 72,74,76 relativ zueinander wird eingeschränkt durch das Eingreifen jeweils eines an den Ecken der längeren Basisseite 82 angeordneten Eingriffsstiftes 85,86 in jeweils eine an dem oberen Kupplungsteil 72 ausgebildete Vorspanneinrichtung 88 und eine an dem unteren Kupplungsteil 76 ausgebildete Vorspanneinrichtung 90, die wiederum identisch zur Vorspanneinrichtung 88 ausgebildet ist. Die Ausbildung der Vorspanneinrichtungen 88 und 90 an dem oberen und unteren Kupplungsteil 72,76 entspricht der in Fig. 2 gezeigten Vorspanneinrichtung 44 bis 64 in Ausbildung und Wirkungsweise. Identische Teile sind daher mit identischen Bezugszeichen versehen. Die Vorspanneinrichtungen 88,90 begrenzen jedoch keine Linearbewegung der Eingriffsstifte 85,86, sondern deren Kreisbewegung auf einem Umfangskreis um die Achse der Lagerzapfen 78,80. Auch in diesem Ausführungsbeispiel wird unter Vermeidung von Linearführungen eine Auslenkung des oberen und unteren Kupplungsteils 72,76 relativ zueinander in X - Y - Richtung erreicht, wobei die Amplitude der Auslenkung sehr groß sein kann und eine große Wiederholgenauigkeit bzw. Rückstellgenauigkeit in die Null-Lage erreicht wird.

Das kinematische Schema dieses in den Figuren 3 bis 5 dargestellten Ausführungsbeispiels ist in Fig. 6 zur Verdeutlichung der Funktionsweise gezeigt. Hierbei wird deutlich, daß durch die rotative Bewegung des Eingriffsstiftes 86 in der Vorspanneinrichtung 88 eine Auslenkung des oberen Kupplungsteils 72 relativ zum unteren Kupplungsteil 76 in X - Richtung ermöglicht wird, während die Auslenkung des Eingriffsstiftes 85 in der Vorspanneinrichtung 90 eine Auslenkung des unteren Kupplungsteils 76 relativ zum oberen Kupplungsteil 72 in Y - Richtung ermöglicht.

Selbstverständlich läßt sich bei der Anordnung eines Lagerzapfens koaxial zur Z - Achse auch eine rotative Auslenkung und damit ein rotativer Toleranzausgleich erreichen. Dieser rotative Toleranzausgleich kann mit einer kreuzschlittenartigen Toleranzausgleichsvorrichtung gemäß den Figuren 1 und 2 kombiniert werden, wodurch die Anzahl der Freiheitsgrade der Auslenkungsbewegungen der Kupplungsteile relativ zueinander sehr groß sein kann.

Um ein Schwingen der Toleranzausgleichsvorrichtung nach einem Auslenkungsvorgang zu vermeiden, kann koaxial zu den Federelementen 46,48 und innerhalb dieser ein Dämpfungselement angeordnet sein, das die Auslenkungsbewegung und die Rückstellungsbewegung in Null-Lage abdämpft. Diese Dämpfungseinrichtung wirkt direkt auf die Eingriffsstifte und macht keine Vergrößerung der Abmessungen der Toleranzausgleichsvorrichtung nötig.

Die Möglichkeit das erfindungsgemäße Prinzip im Hinblick auf die Eingriffs- und Anschlagstifte mittels Normteilen, insbesondere nach DIN 6325, als gehärtete und geschliffene Stifte auszuführen, bietet einen gravierenden Verteil sowohl in kostenmäßiger Hinsicht als auch im Hinblick auf die Präzision der Toleranzausgleichsvorrichtung. Da diese Stifte mit einer Fertigungstoleranz von m6, also mit einer Toleranz von ± 3µm hergestellt werden, tragen sie zur hohen Rückstellgenauigkeit bei.
Obwohl zweckmäßigerweise die Eingriffs- und Anschlagstifte gleichen Durchmesser haben, können je nach Erfordernissen auch Stifte unterschiedlichen Durchmessers verwendet werden.

Die Federeinrichtung zur Vorspannung in die Null-Lage kann zweckmäßigerweise nur aus einer Feder, z.B. einer Schenkelfeder bestehen, zwischen deren Schenkeln die drei Stifte in Längsrichtung aufgenommen werden. Der Einsatz einer Zug- oder Blattfeder ist hierbei ebenfalls möglich. In einer anderen, bevorzugten Ausführungsform wird die Federeinrichtung mit zwei separierten Federelementen 46,48 realisiert, wie es z.B. in Fig. 2 gezeigt ist.

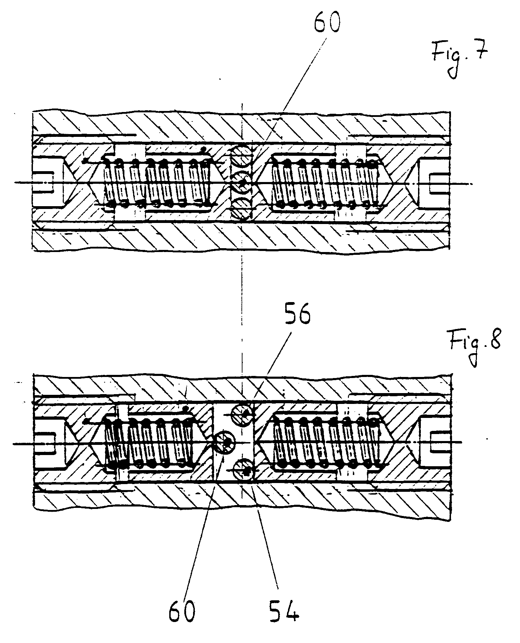

Die Figuren 7 und 8 zeigen einen Schnitt längs der Linie A-A nach der Fig. 2. Hierbei ist in Fig. 7 die Toleranzausgleichsvorrichtung in der Null-Lage gezeigt, die durch die drei durchmesseridentischen Stifte 54,56,60 definiert ist. Diese Stifte 54,56,60 sind gehärtete, geschliffene Normstifte und daher trotz ihrer Präzision äußerst kostengünstig. Bei einer Auslenkung der Toleranzausgleichsvorrichtung nach links, wie dies in Fig. 8 dargestellt ist, wird daher der Eingriffsstift 60 zur Durchführung einer Handhabungsbewegung gegen die linke Feder 46 gedrückt. Diese Auslenkung nach links aus der "absoluten" Null-Lage wird nach Aufhebung der Bewegungskräfte dadurch egalisiert, daß in diesem vorgenannten Fall die linke Feder 46 den Eingriffsstift 60 präzis in die in der Fig. 7 gezeigte Null-Lage zurückführt.

## Patentansprüche

1. Toleranzausgleichsvorrichtung zur Anordnung zwischen einer Antriebsseite, zum Beispiel einem Roboterarm, und einer Plazierungsseite, zum Beispiel einem Greifer,
mit mindestens zwei relativ zueinander bewegbaren Kupplungsteilen,
mit einer Führungseinrichtung für die Bewegung der Kupplungsteile,
mit einer einem Kupplungsteil zugeordneten Vorspanneinrichtung zur Begrenzung der Auslenkungsbewegung der Kupplungsteile relativ zueinander und zur Vorspannung der Kupplungsteile in eine Null-Lage,
wobei die Vorspanneinrichtung mindestens mit einem am anderen Kupplungsteil angeordneten Eingriffselement in Wirkverbindung steht,
dadurch **gekennzeichnet**,
daß die Vorspanneinrichtung (46,48) das als Eingriffsstift ausgebildete Eingriffselement (58,60,85,86) in Richtung auf einen am anderen Kupplungsteil (16,72,76) angeordneten mindestens einen Anschlagstift (54,56) aufweisenden Nullanschlag vorspannt,
daß Eingriffs- (58,60) und Anschlagstifte (54,56) gehärtete und geschliffene Norm-Stifte sind und daß der Durchmesser der Eingriffs- und Anschlagstifte (58,60,54,56) gleich groß ist.

2. Toleranzausgleichsvorrichtung nach Anspruch 1,
dadurch **gekennzeichnet**,
daß eine Linear- (28,30) oder eine Drehführung (82,84) vorgesehen ist.

3. Toleranzausgleichsvorrichtung nach Anspruch 1 oder 2,
dadurch **gekennzeichnet**,
daß zwei senkrecht zueinander angeordnete Linearführungen (28,30) in der Art eines Kreuzschlittens vorgesehen sind.

4. Toleranzausgleichsvorrichtung nach einem der Ansprüche 1 bis 3,
dadurch **gekennzeichnet**,
daß die Vorspanneinrichtung (46,48) als Federeinrichtung ausgelegt ist und
daß der Nullanschlag durch zwei in Längsrichtung der Vorspanneinrichtung mittige und senkrecht zu dieser nebeneinander festgelegte Anschlagstifte (54,56) gebildet ist.

5. Toleranzausgleichsvorrichtung nach einem der Ansprüche 1 bis 4,
dadurch **gekennzeichnet**,
daß die Federeinrichtung zwei Federelemente (46,48) aufweist, deren einander zugewandte Enden von jeweils einer zylinder- oder topfförmigen Buchse (50,52) umgeben sind.

6. Toleranzausgleichsvorrichtung nach Anspruch 5,
dadurch **gekennzeichnet**,
daß die Anschlagstifte (54,56) mindestens um den Durchmesser des Eingriffsstiftes (58,60,85,86) voneinander beabstandet sind.

7. Toleranzausgleichsvorrichtung nach einem der Ansprüche 1 bis 6,
dadurch **gekennzeichnet**,
daß der Eingriffsstift (58,60,85,86) in Null-Lage zwischen den Anschlagstiften (54,56) zu liegen kommt.

8. Toleranzausgleichsvorrichtung nach einem der Ansprüche 3 bis 7,
dadurch **gekennzeichnet**,
daß beide Linearführungen in einem Kupplungsteil (16) ausgebildet sind, das zwischen dem antriebs- und plazierungsseitigen Kupplungsteil (12,14) angeordnet ist.

9. Toleranzausgleichsvorrichtung nach einem der Ansprüche 4 bis 8,
dadurch **gekennzeichnet**,
daß Widerlager (62,64) für die Anlage der voneinander wegweisenden Längsenden der Federelemente (46,48) vorgesehen sind, die parallel zur Vorspannrichtung einstellbar sind,
daß parallel zu den Federelementen eine Dämpfungseinrichtung vorgesehen ist,
daß die Federelemente als Schraubenfedern ausgebildet sind und
daß die Dämpfungseinrichtung koaxial zu und in den Federelementen angeordnet ist.

10. Toleranzausgleichsvorrichtung nach Anspruch 1 oder 2,
dadurch **gekennzeichnet**,
daß die Kupplungsteile (72,76) um zwei parallel zur Roboterarmachse angeordnete und gegenüber dieser versetzte Lagerzapfen (78,80) drehbar gelagert sind und daß die Vorspanneinrichtung (88,90) tangential zu einem Umfangskreis um den zugehörigen Lagerzapfen (78,80) angeordnet ist.

11. Toleranzausgleichsvorrichtung nach einem der Ansprüche 1 bis 10,
dadurch **gekennzeichnet**,
daß die Federeinrichtung (46,48) aus zwei gegenüberliegenden Federelementen gebildet ist.

12. Toleranzausgleichsvorrichtung nach einem der Ansprüche 1 bis 10,
dadurch **gekennzeichnet**,
daß die Federeinrichtung (46,48) aus einer Feder, insbesondere einer Schenkelfeder, einer Zug- oder Blattfeder besteht.

13. Toleranzausgleichsvorrichtung nach einem der Ansprüche 1 bis 12,
dadurch **gekennzeichnet**,
daß ein Lagesensor zur Erfassung der Lage des Eingriffsstiftes (58,60) in der Vorspanneinrichtung vorgesehen ist.

## Claims

1. Tolerance compensator for positioning between a drive side, e.g. a robot arm, and a placing side, e.g. a gripper, with at least two coupling parts movable relative to one another, with a guide device for the movement of the coupling parts, with a pretensioning device associated with a coupling part for limiting the deflecting movement of the coupling parts relative to one another and for pretensioning the coupling parts in a zero position, the pretensioning device being in operative connection with a least one engagement element located on the other coupling part,
**characterized** in that
the pretensioning device (46, 48) pretensions the engagement element (58, 60, 85, 86) constructed as an engagement pin in the direction of a zero stop comprising at least one stop pin (54, 56) positioned on the other coupling part (16, 72, 76) and that the engagement (58, 60) and stop pins (54, 56) are hardened, ground standard pins and that the diameter of the engagement and stop pins (58, 60, 54, 56) is identical.

2. Tolerance compensator according to claim 1,
**characterized** in that
a linear (28, 30) or a rotary guide (82, 84) is provided.

3. Tolerance compensator according to claim 1 or 2,
**characterized** in that
there are two linear guides (28, 30) arranged perpendicular to one another in the manner of a cross slide.

4. Tolerance compensator according to one of the claims 1 to 3,
**characterized** in that
the pretensioning device (46, 48) is designed as a spring device and that the zero stop is formed by two centrally juxtaposed stop pins (54, 56) in the longitudinal direction of and perpendicular to the pretensioning device.

5. Tolerance compensator according to one of the claims 1 to 4,
**characterized** in that
the spring device has two spring elements (46, 48), whose facing ends are surrounded by in each case one cylindrical or cup-shaped bush (50, 52).

6. Tolerance compensator according to claim 5,
**characterized** in that
the stop pins (54, 56) are spaced from one another at least by the diameter of the engagement pin (58, 60, 85, 86).

7. Tolerance compensator according to one of the claims 1 to 6,
**characterized** in that
the engagement pin (58, 60, 85, 86) in the zero position is located between the stop pins (54, 56).

8. Tolerance compensator according to one of the claims 3 to 7,
**characterized** in that
both linear guides are constructed in a coupling part (16), which is positioned between the drive and placing-side coupling part (12, 14).

9. Tolerance compensator according to one of the claims 4 to 8,
**characterized** in that
abutments (62, 64) are provided for the engagement of the longitudinal ends of the spring elements (46, 48) which are directed away from one another and adjustable parallel to the pretensioning direction, that a damping device is provided parallel to the spring elements, that the spring elements are constructed as helical springs and that the damping device is positioned coaxially to and in the spring elements.

10. Tolerance compensator according to claim 1 or 2,
**characterized** in that
the coupling parts (72, 76) are mounted in rotary manner about two journals (78, 80) arranged parallel to the robot arm axis and displaced with respect thereto and that the pretensioning device (88, 90) is arranged tangentially to a circumferential circle about the associated journal (78, 80).

11. Tolerance compensator according to one of the claims 1 to 10,
**characterized** in that
the spring device (46, 48) is formed from two opposite spring elements.

12. Tolerance compensator according to one of the claims 1 to 10,
**characterized** in that
the sping device (46, 48) comprises a spring, particularly a spring clip, a tension or leaf spring.

13. Tolerance compensator according to one of the claims 1 to 12,
**characterized** in that
there is a position sensor for determining the position of the engagement pin (58, 60) in the pretensioning device.

## Revendications

1. Dispositif de compensation des tolérances, destiné à être monté entre un côté moteur, par exemple un bras de robot et un côté de mise en place par exemple un organe de préhension,
- avec au moins deux pièces d'accouplement relativement mobiles l'une par rapport à l'autre,
- avec au moins un dispositif de guidage pour le mouvement des pièces d'accouplement,
- avec au moins un dispositif de serrage associé à une pièce d'accouplement pour limiter le mouvement de débattement des pièces d'accouplement l'une par rapport l'autre et pour pré-contraindre les pièces d'accouplement dans une position zéro, le dispositif de pré-contrainte coopérant avec au moins un élément d'intervention prévu sur l'autre pièce d'accouplement,
dispositif caractérisé en ce que :
- le dispositif de pré-contrainte (46, 48) précontraint l'élément d'intervention (58, 60, 85, 86) en forme de tige d'intervention, en direction d'une butée zéro comportant au moins une tige de butée (54, 56) prévue sur l'autre pièce d'accouplement (16, 72, 76),
- les tiges d'intervention (58, 60) et de butée (54, 56) étant des tiges normalisées, traitées et rectifiées et
- le diamètre des tiges d'intervention et de butée (58, 60, 54, 56) est identique.

2. Dispositif de compensation des tolérances selon la revendication 1, caractérisé par un guidage linéaire (28, 30) ou de rotation (82, 84).

3. Dispositif de compensation des tolérances selon la revendication 1 ou 2, caractérisé par deux guides linéaires (28, 30) disposés perpendiculairement l'un à l'autre à la manière d'un chariot à course croisée.

4. Dispositif de compensation des tolérances selon l'une des revendications 1 à 3, caractérisé en ce que :
- le dispositif de pré-contrainte (46, 48) est en forme de dispositif à ressort et
- la butée zéro est constituée par deux tiges de butée (54, 56) fixées au milieu du dispositif de précontrainte dans la direction longitudinale et perpendiculairement à ce dispositif à côté des tiges de butée (54, 56) fixes.

5. Dispositif de compensation des tolérances selon l'une des revendications 1 à 4, caractérisé en ce que le dispositif à ressort comporte deux éléments à ressort (46, 48) dont les extrémités en regard l'une de l'autre sont entourées chaque fois de manchon cylindrique ou en forme de pot (50, 52).

6. Dispositif de compensation des tolérances selon la revendication 5, caractérisé en ce que les tiges de butée (54, 56) sont écartées l'une de l'autre d'une distance correspondant au moins au diamètre de la tige d'intervention (58, 60, 85, 86).

7. Dispositif de compensation des tolérances selon l'une des revendications 1 à 6, caractérisé en ce que la tige d'intervention (58, 60, 85, 86) arrive en appui dans la position zéro entre les tiges de butée (54, 56).

8. Dispositif de compensation des tolérances selon l'une des revendications 3 à 7, caractérisé en ce que les deux guides linéaires sont réalisés dans une pièce d'accouplement (16) qui est prévue entre la pièce d'accouplement (12, 14) du côté de l'entraînement et de la mise en place.

9. Dispositif de compensation des tolérances selon l'une des revendications 4 à 8, caractérisé en ce que :
- des appuis (62, 64) sont prévus pour la mise en place des extrémités longitudinales écartées l'une de l'autre des éléments à ressort (46, 48) qui sont réglables parallèlement au dispositif de précontrainte,
- parallèlement aux éléments à ressort il est prévu un dispositif d'amortissement,
- les éléments à ressort sont en forme de ressorts hélicoïdaux et
- le dispositif d'amortissement est monté coaxialement par rapport aux éléments à ressort.

10. Dispositif de compensation des tolérances selon l'une des revendications 1 ou 2, caractérisé en ce que :
- les pièces d'accouplement (72, 76) sont prévues autour de deux axes parallèles de bras de robot et sont montées à rotation par rapport à ces tourillons d'axes décalés (78, 80) et
- le dispositif de pré-contrainte (88, 90) est monté tangent à un cercle périphérique des tourillons d'axes correspondants (78, 80).

11. Dispositif de compensation des tolérances selon l'une des revendications 1 à 10, caractérisé en ce que le dispositif à ressort (46, 48) se compose de deux éléments à ressort opposés.

12. Dispositif de compensation des tolérances selon l'une des revendications 1 à 10, caractérisé en ce que le dispositif à ressort (46, 48) se compose d'un ressort, notamment d'un ressort à branches, d'un ressort de traction ou d'un ressort-lame.

13. Dispositif de compensation des tolérances selon l'une des revendications 1 à 12, caractérisé par un capteur de position pour détecter la position de la tige d'intervention (58, 60) dans le dispositif de pré-contrainte.
